# EUROPEAN PATENT APPLICATION

(11) **EP 4 287 445 A1**
(43) Date of publication of application: **06.12.2023**
(21) Application number: 22177242.9
(22) Date of filing: 03.06.2022
(51) Int. Cl.: H02J 7/00, B60L 8/00, B60L 53/22, H02J 7/35

(54) **ELECTRIC VEHICLE WITH SOLAR PANELS**

(71) Applicant: Bayerische Motoren Werke Aktiengesellschaft, 80809 München (DE)
(72) Inventor: Molina, Vincent, Menlo Park, 94025 (US)

(57) **Abstract**

The present invention relates to an electric vehicle, comprising an LV battery, an HV battery, a series string of n > 1 solar panels, n DPP converters, and a string converter, wherein a positive input each DPP converter is connected to a positive output of a respective solar panel and a negative input is connected to a negative output of this solar panel, positive outputs of the DPP converters are connected to a positive pole of the LV battery, negative outputs of the DPP converters are connected to negative poles of both batteries, a positive input of the string converter is connected to a positive output of the series string and a negative input is connected to a reference potential, a positive output of the string converter is connected to the HV battery's positive pole, and a negative output of the string converter is connected to a reference potential.

## Description

The invention relates to an electric vehicle, comprising an LV battery and an HV battery, a series string of solar panels, and DC-to-DC converters, wherein positive load-side outputs of the converters are connected to a positive pole of one of the batteries and negative load-side outputs of the converters are connected to a negative pole of this battery.

US 2007/0125417 A1 discloses s solar energy system for a hybrid vehicle that utilizes an attachable solar panel to receive and convert solar energy into direct current electricity. A wiring harness directs the direct current electricity generated by the solar panel to a converter. The converter transforms the direct current electricity from a comparatively lower energy state to a comparatively higher energy state.

US 2013/0092457 A1 discloses a photovoltaic apparatus for a vehicle including a plurality of solar modules electrically isolated from each other and adapted to receive solar radiation and convert the radiation to electrical energy. The apparatus includes at least one DC/DC converter electrically coupled to the electrically isolated modules adapted to receive the electrical energy from the solar modules and boost the voltage to be delivered to at least one component of the vehicle. The solar modules include a plurality of solar cells adapted to receive solar radiation and convert the radiation to electrical energy.

US 8,120,308 B2 discloses a connection system adapted to charge a high voltage battery in an electric vehicle with multiple low voltage solar panels. The connection system includes sets of transmission lines to individually connect each one of the solar panels to each individual one of the battery cells making up the battery. With the connection system the high voltage battery can be charged by the lower voltage solar panels without using a lossy DC-DC converter system that converts the DC solar panel output to AC for transforming to the much higher voltage across the primary terminals of battery before converting back to DC to connect to the battery.

US 8,633,671 B2 discloses photovoltaic (PV) systems for charging high voltage batteries used to power the electric traction motor of an electrically powered vehicle. Suitable PV systems, fabricated of interconnected solar cells, modules or arrays, may be (designed and adapted to efficiently charge a high Voltage battery by matching the characteristics of the PV system to the fully-charged voltage of the battery. Preferably, a charging efficiency of about 90% or greater may be achieved through proper matching of the PV system to the battery. A reconfigurable PV system, based on assemblies of solar modules, is also described. The reconfigurable PV system is capable of properly matching itself to a variety of different batteries, each of which may have a different voltage when fully charged. By using several reconfigurable PV systems, a variety of batteries with different charged Voltages may be charged simultaneously while utilizing substantially the full capacity of the PV system to charge batteries.

US 9,583,939 B2 discloses a solar power system is provided for maximizing solar power conversion. The solar power system includes n power units connected in series and n-1 DC-DC converting units, and each of the n-1 DC-DC converting units is coupled to at least one of n solar power units. Each of the n-1 DC-DC converting units is configured to control the correspondingly connected solar power units to operate at a target current generation. The solar power system further includes a con trolling unit coupled to the n-1 DC-DC converting units. The controlling unit monitors and compares the n currents generated by the n solar power units. Based on the current comparison, the controlling unit determines a series current and controls the n solar power units so that each of the generated photovoltaic currents is substantially equal to the determined series current.

US 9,614,399 B2 discloses a solar ECU included in a charging controller which is configured to temporarily store electric power generated by an in vehicle solar cell of an electric power supply unit in a ow-voltage battery when a vehicle is traveling. Further, when the vehicle is traveling, a battery ECU included in the charging controller is configured to maintain a charging relay in an open state (disconnected state) so that the electric power temporarily stored in the low-voltage battery is not supplied to a main battery. On the other hand, when the vehicle is traveling, the solar ECU supplies the electric power temporarily stored in the low-voltage battery to a sub-battery.

US 9,799,779 B2 discloses a system and method which includes a circuit for protecting a photovoltaic string. A bypass switch connects in parallel to the photovoltaic string and a hot spot protection switch connects in series with the photovoltaic string. A first control signal controls opening and closing of the bypass switch and a second control signal controls opening and closing of the hot spot protection switch. Upon detection of a hot spot condition the first control signal closes the bypass switch and after the bypass switch is closed the second control signal opens the hot spot protection switch.

US 2022/0045628 A1 discloses power conversion circuit is disclosed. The power conversion circuit includes at least one DC bus. The power conversion circuit further includes a plurality of DC-AC conversion units coupled to the DC bus and configured to convert a DC voltage into an AC voltage. The power conversion circuit also includes a multi-winding transformer comprising a magnetic core and a plurality of windings, where each DC-AC conversion unit is coupled to a corresponding winding of the multi-winding transformer.

Hoejeong Jeong, Hyunji Lee, Yu-Chen Liu, and Katherine A. Kim: "Review of Differential Power Processing Converter Techniques for Photovoltaic Applications", IEEE TRANSACTIONS ON ENERGY CONVERSION, VOL. 34, NO. 1, MARCH 2019, pp. 351-360, reviews differential power processing (DPP) converters that are utilized in photovoltaic (PV) power systems to achieve high efficiency power output, even under uneven lighting or mismatched PV cell situations. Since this DPP concept has been introduced for PV systems, various topologies and control algorithms have been proposed and validated, showing the benefits of DPP converters systems over existing series string and full power processing converter solutions. However, DPP systems are highly coupled and can be challenging to control. Various architectures, topologies, and control strategies for both series and parallel DPP architectures are reviewed and compared. Tradeoffs of different DPP converters and topologies are discussed. Also, the power curve for the PV connected to bus, PV to PV, and PV to independent port series DPP architectures are evaluated in terms of inverter interaction.

In Hoejeong Jeong et al., fig.3, a PV-bus-direct architecture is shown that enables to reduce the amount of power that has to be processed through the DPP converters (ideally 0 W when the solar cells are generating power under perfectly equal conditions like ageing, radiation, temperature, etc. However, there is he drawback that only one electric network (high voltage, HV, or low voltage, LV) can be fed with this architecture, which means that additional losses are generated if energy is to be transferred to the network that is not directly connected to the solar panels.

It is the **object** of the present invention to at least partially overcome the problems associated with the prior art. It is a particular object of the present invention to provide a particularly efficient and cost-effective way to charge batteries of an electric car using on-board solar panels.

The object is achieved according to the features of the independent claims. Advantageous embodiments can be found, e.g., in the dependent claims and/or in the description.

The object is particularly achieved by an electric vehicle, comprising a low voltage (LV) battery, a high voltage (HV) battery, a series string of n > 1 solar panels, n first DC-to-DC DPP converters, and a second DC-to-DC converter (in the following, without loss of generality, also called "string converter"). A positive supply-side input of each of the DPP converters is connected to a positive output of a respective solar panel. A negative supply-side input is connected to a negative output of this respective solar panel. Positive load-side outputs of the DPP converters are connected to a positive pole of the LV battery. Negative load-side outputs of the DPP converters are connected to a negative pole of the LV battery. A positive supply-side input of the string converter is connected to a positive output of the series string of solar panels. A negative supply-side input is connected to a reference potential. A positive load-side output of the string converter is connected to a positive pole of the HV battery. A negative pole of the HV battery may be connected to a reference potential. A negative load-side output of the string converter is connected to the reference potential. A controller or control means is adapted to control operation of the string converter and the DPP converters.

This electric vehicle has the advantage that an overall efficiency gain is achieved through the direct feeding of the LV battery via the outputs of the DPP converters since the charging energy doesn't need to be transferred from HV battery to the LV battery.

Furthermore, the LV battery is operated with a stable constant voltage and will exchange only small amounts of energy with the DPP converters as the control strategies tend to minimize the processed energy, so that a typically low-capacity LV battery is a very good fit. Additionally, the LV battery can be downsized due to the fact that it will be charged by solar energy of the solar panels when the solar cells are generating power under unequal conditions like manufacturing tolerances, different ageing, different solar radiation, temperature, etc. This, in turn, leads to a cost reduction. Also, no additional components like switches etc. are required.

The electric vehicle may be a plug-in hybrid vehicle, PHEV, or a fully battery electric vehicle, BEV. The electric vehicle may be a passenger car, a truck, a bus, a motorcycle, etc.

In particular, "positive" and "negative" refer to an electric polarity or a voltage level.

In particular, the HV battery is an electric vehicle battery, EVB. The HV battery HV may, e.g., be a lithium-ion battery.

The LV battery may be provided for powering low-voltage electric loads, e.g., ECUs and sensors. The LV battery LV may, e.g., be a lead-acid battery.

Alternatively, the LV battery may be a part of the HV battery. This may be implemented in such a way that some of the battery cells of the HV battery are used to provide the voltage / electric power for the LV network.

A solar / photovoltaic panel may comprise one or more solar cells and may also be called a solar or photovoltaic (PV) module. Incident light causes the solar panel to produce a voltage that is present between the associated outputs, i.e., the positive output (terminal) and the negative output (terminal).

That the n > 1 (i.e., two or more) solar panels are arranged in a series string comprises that the solar panels are electrically connected in series such that a negative output of a solar panel is connected to a positive output of the following solar panel of the series string. The positive output of the first solar panel, which is not connected to another solar panel, and the negative output of the n-th and last solar panel, which is also not connected to another solar panel, may be regarded as the positive output and the negative output, respectively, of the series string.

In particular, a DPP converter converts a DC voltage generated by the solar panel which is connected to its supply side to a DC voltage at its load side. The load-side voltage is then applied to the LV battery. The DPP converter operates under the control of the controller. In particular, the DPP converter comprises at least one electronic switch, e.g., a transistor, e.g., a MOSFET. The operation of this at least one electronic switch may be operated by the controller to achieve a desired conversion characteristic. For example, in a nominal operation, the DPP converters may be operated in a "DPP mode" in which the amount of energy that flows through the DPP converters is minimized, to prevent losses.

That the positive load-side outputs of the DPP converters are connected to the positive pole of the LV battery in particular comprises that the positive outputs of all n DPP converters are connected to each other and the positive pole of the LV battery.

In particular, the string converter steps up the positive voltage applied to its positive supply-side input by the positive output of the series string of the solar panels (while stepping down current) and applies the stepped-up voltage to the positive pole of the HV battery. Thus, the HV battery is charged via the string converter. The string converter may comprise at least one electronic switch, e.g., a transistor, e.g., a MOSFET. The operation of this at least one electronic switch may also be operated by the controller to achieve a desired conversion characteristic. The controller that controls operation of the string converter may be the same controller that controls operation of DPP converters, or may be a different controller.

The above mentioned topology may thus comprise four reference potentials:
- A "first" reference potential connected to the negative input of the string converter;
- A "second" reference potential connected to the negative output of the string converter;
- A "third" reference potential connected to the negative pole of the HV battery; and
- A "fourth" reference potential connected to the negative pole of the LV battery.

These reference potentials may all be different, partly different, or all be the same. For example, the reference potentials connected to the negative input of the string converter and to the negative output of the string converter, respectively, may be the same and may or may not be the same as the reference potential connected to the negative pole of the HV battery. For example, the reference potential connected to the negative pole of the HV battery and the reference potential connected to the negative pole of the LV battery may be different.

The controller may comprise one or more IC components or units like a microcontroller, FPGA, ASIC, etc. The controller may be adapted, e.g., programmed, to operate the DPP converters in the "DPP mode" in which the amount of energy that flows through the DPP converters is minimized to keep losses small. In the DPP mode, the LV battery is only charged by the DPP converters if there is an imbalance, i.e., if the voltage level applied to the DPP converters by the solar panels is different, e.g., because of manufacturing tolerances, different solar incident intensities, etc. The DPP mode of operation is generally known, e.g., as described in the article by Hoejeong Jeong et al. above, and is thus not described further.

That the outputs of the converters are connected to respective poles of the respective batteries may comprise a direct connection or an indirect connection via the vehicle's LV or HV electric supply system.

This arrangement of solar panels and converters may also be called a PV-bus-direct architecture with DPP converters. The converters may be implemented and/or operated in analogy to the architecture described in the article by Hoejeong Jeong et al., fig.3. However, there is the difference to the article of Hoejeong Jeong et al., fig.3, that in the present case the positive pole of the HV battery is only connected to the string converter and the HV battery is thus charged only by the string converter, while at the same time the positive pole of the LV battery is only connected to the DPP converters, and the LV battery is thus charged only by the DPPs converters. This gives the above mentioned advantages of the present invention.

It is an embodiment that the electric vehicle further comprises a battery charger connected to the HV battery. This enables charging the HV battery at a charging point through the battery charger. The charging station may, e.g., be a charging station or a wall box.

It is an embodiment that the battery charger is an AC charger, i.e., a charger that converts an AC supply current from the charging station to a DC current applied to the HV battery. This has embodiment the advantage that it may be implemented widely since to date many electric vehicles use on-board AC chargers. Such AC chargers typically also have a DC-to-DC converter function to convert a rectified AC supply voltage to the voltage level of the HV battery. The AC charger may also be a charger that is used to convert an AC induction voltage generated by wireless inductive charging.

It is an embodiment that the battery charger is a DC charger, i.e., a charger that converts a DC supply voltage from the charging station to a DC voltage applied to the HV battery. This embodiment is particularly useful for electric vehicles that are adapted for DC fast charging.

It is an embodiment that the string converter is the battery charger. This gives the advantage that no additional component needs to be provided as the string converter. This, in turn, reduces costs. Therefore, the battery charger also acts as a DC-to-DC converter between the string converter and the positive pole of the HV battery. In an embodiment, the charger may be adapted to switch between converting voltage from the external charging source to the HV battery voltage (e.g., from 110 V or 230 V to 400 V) and converting a voltage from the solar panel string to the HV battery voltage, and back, as desired.

It is an embodiment that the string converter is a boost converter. This is particularly advantageous to increase a voltage level of the solar panel string to a voltage level required to charge the HV battery. In particular, the voltage / current conversion is typically regulated through PWM (Pule Wide Modulation). Thus, switching between converting voltage / current from the external charging source to the HV battery voltage / current to converting voltage / current from the solar panel string to the HV battery voltage / current can easily be implemented by adjusting the PWM characteristics.

It is an embodiment that the DPP converters are flyback converters.

It is an embodiment that the LV battery has a battery voltage between 12 V and 48 V, in particular of 12 V. However, the LV battery is generally not restricted to this voltage range.

It is an embodiment that the HV battery has a battery voltage between 60 V and 1000 V, in particular between 400 V, 800 V, 900 V, or even more. However, generally, the HV battery is not restricted to this voltage range.

It is an embodiment that the controller is adapted, e.g., programmed, to operate the (i.e., one, some, or all) DPP converters in at least one further mode (without loss of generality also called a "charge mode") in which the amount of energy that flows through the DPP converters is raised over the DPP level, in particular maximized. This is particularly useful in some specific use cases, e.g., when the LV battery has a low state of charge, SoC, and needs to be charged. The LV battery is supplying the ECUs and sensors that are highly safety relevant and need a high level of reliability.

The object is also achieved by a method for charging the LV battery and the HV battery of the electric vehicle according to any of the preceding claims, wherein, when electric energy is produced by the solar panels, the LV battery is charged by DPP converters, and the HV battery is charged via the string converter.

The above described features and advantages of the invention as well as their kind of implementation will now be schematically described in more detail by at least one embodiment in the context of one or more figures.

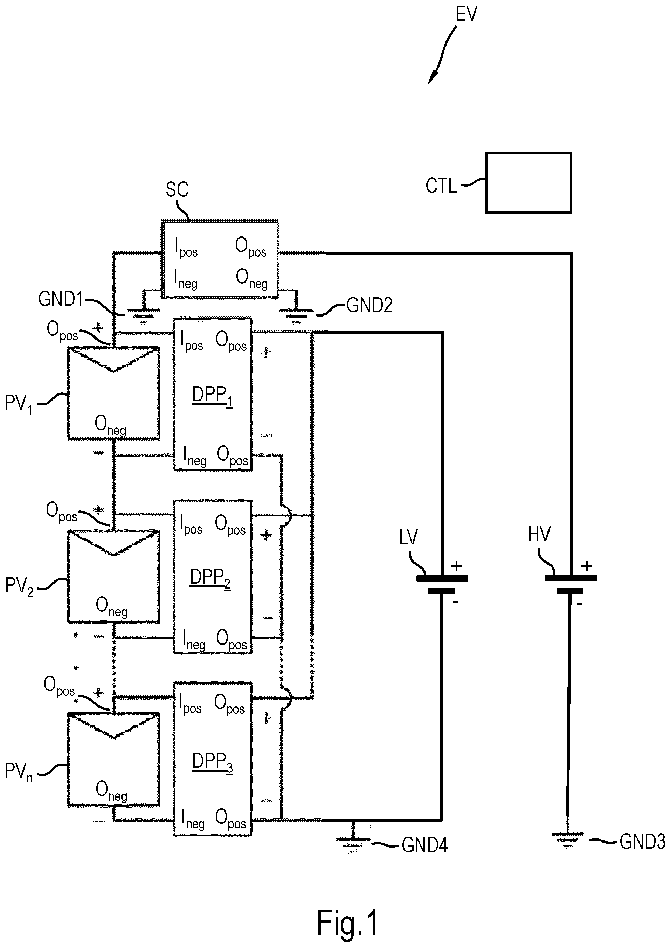

Fig.1 shows an electric vehicle EV, comprising an LV battery LV, an HV battery HV. In particular, the HV battery HV may be used to power one or more electric drive motors. The HV battery HV may, e.g., have a battery voltage of 400 V or 800 V. The HV battery HV may, e.g., be a lithium-ion battery. The LV battery LV may, e.g., be used to power low-voltage electric loads like sensors, lamps. The LV battery LV may, e.g., have a battery voltage of 12 V. The LV battery LV may, e.g., be a lead-acid battery.

The electric vehicle EV further comprises multiple solar panels PVᵢ, here: a series string of n > 2 solar panels PV₁, PV₂, ..., PVₙ. A respective negative output O_{neg} of the solar panels PV₁, PV₂, ..., PVₙ₋₁ is connected to a positive output Oₚₒₛ of the solar panels PV₂, PV, ..., PVₙ, respectively. A respective negative output O_{neg} of the solar panels PV₁, PV₂, ..., PVₙ₋₁ is connected to a positive output Oₚₒₛ of the solar panels PV₂, PV, ..., PVₙ, respectively. A positive output Oₚₒₛ (PV₁) of the solar panel PV₁, which is not connected to any of the negative outputs O_{neg} (PV₂) to O_{neg} (PVₙ), acts as the positive output of the series string of the solar panels PV₁, PV₂, ..., PVₙ. A negative output O_{neg} (PVₙ) of the n-th solar panel PVₙ, which is not connected to any of the positive outputs Oₚₒₛ (PV₁) to Oₚₒₛ (PVₙ₋₁), acts as the negative output of the series string of the solar panels PV₁, PV₂, ..., PVₙ.

The positive output Oₚₒₛ (PV₁) of the solar panel PV₁ is connected to a positive supply-side input Iₚₒₛ of a DC-to-DC converter ("string converter") SC which may be implemented as a boost converter, e.g., in analogy to Hoejeong Jeong et al., fig.3. A negative supply-side input I_{neg} is connected to a first reference potential, e.g., ground GND1. A positive load-side output Oₚₒₛ of the string converter SC is connected to a positive pole of the HV battery HV, while a negative load-side output O_{neg} of the string converter SC is connected to a second reference potential, e.g., ground GND2. Operation of the string converter SC, in particular at least on electronic switch thereof, may be controlled by a controller CTL.

The negative pole of the HV battery HV is connected to a third reference potential, e.g., ground GND3. The second reference potential GND2 may be equal to the third reference potential GND3. This can also be formulated such that the negative load-side output O_{neg} of the string converter SC is connected to the negative pole of the HV battery HV. The first reference potential GND1 may be equal to the second reference potential GND2.

The electric vehicle EV also comprises n DPP converters DPP₁, ..., DPPₙ that may be implemented as flyback converters, e.g., in analogy to Hoejeong Jeong et al., fig.3. Load-side inputs Iₚₒₛ (DPPᵢ) and I_{neg} (DPPᵢ) of each of the DPP converters DPPᵢ with i = 1, ..., n are connected to respective outputs Oₚₒₛ (PVᵢ) and O_{neg} (PVᵢ) of a respective solar panel PVᵢ., i.e., a positive input Iₚₒₛ (DPPᵢ) to a positive output Oₚₒₛ (PVᵢ) and a negative input Iₚₒₛ (DPPᵢ) to a negative output Oₚₒₛ (PVᵢ).

The positive load-side outputs Oₚₒₛ (DPPᵢ) of all DPP converters DPPᵢ are connected to a positive pole of the LV battery LV. The negative load-side outputs O_{neg} (DPPᵢ) of all DPP converters DPPᵢ are connected to a negative pole of the LV battery LV as well as a negative pole of the HV battery HV which, in turn, are connected to a fourth reference potential, e.g., ground GND4. The fourth reference potential GND4 may be different from the third reference potential GND3, in particular if the string converter SC comprises a galvanic isolation.

Operation of the DPP converters DPPᵢ, in particular at least on electronic switch thereof, may be controlled by the controller CTL. In particular, the DPP converters DPPᵢ may be individually controlled by the controller CTL. The solar panels PVᵢ, DPP converters DPPᵢ, and the string converter SC form a PV-bus-direct architecture with DPP converters.

Particularly, if the electric vehicle EV is a plug-in hybrid vehicle or a fully battery electric vehicle, the HV battery HV may be charged by connecting an on-board battery charger to a charging station by either wireless or wire-based charging. Typically, the battery charger comprises the functionality of a DC-to-DC converter to convert a lower voltage level of the supply voltage applied by the charging station to a higher battery voltage level of the HV battery HV.

Optionally, the battery charger may be used as the string converter SC, in particular during times in which the electric vehicle EV is not connected to a charging station. In particular, the DC-to-DC converter of the battery charger is implemented as a boost converter controlled by a PWM signal. By varying the PWM signal, the boost converter may be adapted to convert the voltage level of the charging station or the voltage level of the output Oₚₒₛ (PV₁) to the voltage level of the HV battery HV, as desired.

Thus, when electric energy is produced by the solar panels PVᵢ, the LV battery LV is charged by DPP converters DPPᵢ, and the HV battery HV is charged by the string converter SC.

The controller CTL is adapted to control operation of the DPP converters DPPᵢ in a (nominal) DPP mode in which a charge current to the LV battery LV is only created in case of imbalances of the voltages supplied by the solar panels PVᵢ. Optionally, the controller CTL may also be adapted to control operation of the DPP converters DPPᵢ in a charge mode in which a charge current to the LV battery LV is raised above the DPP mode level and is not only applied when there are imbalances of the solar panel voltages but, e.g., continuously.

Of course, the invention is not restricted to the described embodiment.

### List of Reference Signs

- CTL: Controller
- DPPᵢ: i-th Flyback converter
- EV: Electric vehicle
- GND1: First reference potential
- GND2: Second reference potential
- GND3: Third reference potential
- GND4: Fourth reference potential
- HV: High-voltage battery
- I_{neg}: Negative input
- Iₚₒₛ: Positive input
- LV: Low-voltage battery
- O_{neg}: Negative output
- Oₚₒₛ: Positive output
- PVᵢ: i-th Solar panel
- SC: String converter

## Claims

1. An electric vehicle (EV), comprising
- an LV battery (LV) and an HV battery (HV),
- a series string (PVᵢ - PVₙ) of n > 1 solar panels (PVᵢ),
- n DPP converters (DPPᵢ), and
- a string converter (SC),
wherein
- a positive supply-side input (Iₚₒₛ) of each of the DPP converters (DPPᵢ) is connected to a positive output (Oₚₒₛ) of a respective solar panel (PVᵢ) and a negative supply-side input (I_{neg}) is connected to a negative output (O_{neg}) of this respective solar panel (PVᵢ),
- positive load-side outputs (Oₚₒₛ) of the DPP converters (DPPᵢ) are connected to a positive pole of the LV battery (LV),
- negative load-side outputs (O_{neg}) of the DPP converters (DPPᵢ) are connected to a negative pole of the LV battery (LV),
- a positive supply-side input (Iₚₒₛ) of the string converter (SC) is connected to a positive output (Oₚₒₛ) of the series string (PVᵢ - PVₙ) of solar panels (PVᵢ) and a negative supply-side input (I_{neg}) is connected to a reference potential (GND1),
- a positive load-side output (Oₚₒₛ) of the string converter (SC) is connected to a positive pole of the HV battery (HV),
- a negative load-side output (O_{neg}) of the string converter (SC) is connected to a reference potential (GND2), and
- a controller (CTL) adapted to control operation of the string converter (SC) and the DPP converters (DPPᵢ).

2. The electric vehicle (EV) according to any of the preceding claims, further comprising a battery charger connected to the HV battery (HV).

3. The electric vehicle (EV) according to claim 2 wherein the battery charger is an AC charger.

4. The electric vehicle (EV) according to any of the claims 2 to 3, wherein the string converter (SC) is the battery charger.

5. The electric vehicle (EV) according to claim 4, wherein the battery charger is adapted to switch between converting a voltage from an external charging source to the HV battery (HV) voltage and converting a voltage from the solar panel string (PVᵢ - PVₙ) to the HV battery (HV) voltage, and back.

6. The electric vehicle (EV) according to any of the preceding claims, wherein the string converter (SC) is a boost converter.

7. The electric vehicle (EV) according to any of the preceding claims, wherein the DPP converters (DPPᵢ) are flyback converters.

8. The electric vehicle (EV) according to any of the preceding claims, wherein the LV battery (LV) has a battery voltage between 12 V and 48 V, in particular of 12 V.

9. The electric vehicle (EV) according to any of the preceding claims, wherein the HV battery (HV) has a battery voltage between 60 V and 1000 V, in particular between 400 V and 800 V.

10. The electric vehicle (EV) according to any of the preceding claims, wherein the controller (CTL) is adapted to operate the DPP converters (DPPᵢ) in at least one further mode in which the amount of energy that flows through the DPP converters (DPPᵢ) is raised over the DPP level.

11. A method for charging the LV battery (LV) and the HV battery (HV) of the electric vehicle (EV) according to any of the preceding claims, wherein, when electric energy is produced by the solar panels (PVi), the LV battery (LV) is charged by DPP converters (DPPᵢ), and the HV battery (HV) is charged by the string converter (SC).
